# EUROPEAN PATENT SPECIFICATION

(11) **EP 2 811 885 B1**
(45) Date of publication and mention of the grant of the patent: **09.05.2018**
(21) Application number: 13703861.8
(22) Date of filing: 21.01.2013
(51) Int. Cl.: A47L 9/28, A47L 5/24, B25F 5/02, H01M 2/10

(54) **VACUUM CLEANER**
STAUBSAUGER
ASPIRATEUR

(30) Priority: 10.02.2012 GB 201202349
(43) Date of publication of application: 17.12.2014
(73) Proprietor: Dyson Technology Limited, Malmesbury, Wiltshire SN16 0RP (GB)
(72) Inventor: THOMPSON, Daniel, Malmesbury Wiltshire SN16 0RP (GB)
(74) Representative: Lerwill, Jonathan Ashley Ronald
(86) International application number: PCT/GB2013/050118
(87) International publication number: WO 2013/117900

(56) References cited:
- EP-A1- 1 068 934
- EP-A2- 1 780 865
- WO-A1-2005/062322
- DE-A1- 3 713 886
- GB-A- 2 440 107
- US-A- 5 388 749

## Description

### Technical field

The invention relates to a vacuum cleaner.

### Background to the invention

There are various types of vacuum cleaners available on the market, and these can be categorized generally into "cylinder" vacuum cleaners, "upright" vacuum cleaners, "handheld" vacuum cleaners and "stick" vacuum cleaners, also known as "stick-vacs".

Cylinder and upright vacuum cleaners are commonplace and are generally used as a household's primary vacuum cleaner for heavy-duty cleaning tasks around the home. As a result they tend to be mains-operated. In contrast to cylinder and upright vacuum cleaners, handheld vacuum cleaners are portable in the sense that they are light enough to be carried in the hand and do not need to be supported on the floor by a rolling assembly like cylinder and upright vacuum cleaners. Typically, they are powered by batteries. Because of this, handheld vacuum cleaners are better suited to low-duty cleaning jobs such as spot-cleaning of floors and upholstery and vehicle interiors, for example.

Stick-vac cleaners are marketed as offering a lightweight alternative to upright cleaners for relatively low duty floor-cleaning applications, such as cleaning up floor spills.

Common with all types of vacuum cleaners is the requirement for a user to be able to turn them on and off. Typically, a simple on/off button is provided that can be pressed to turn the machine off and then pressed again to turn the machine off. GB2440107A discloses a hand-held vacuum cleaner comprising a handgrip which includes a trigger switch. The invention relates to improvements in the means for activating and deactivating vacuum cleaners.

### Summary of the invention

The invention provides a vacuum cleaner comprising a main body and a separating apparatus associated with the main body, wherein the main body includes a suction generator for drawing air into the separating apparatus and a handle arrangement including a trigger member for activating the suction generator. The trigger member is resiliently biased into a first position in which the suction generator does not operate, and is movable into a second position to activate the suction generator, wherein, when in the first position, a contact surface of the trigger member is spaced away from an adjacent surface of the handle arrangement and, when in the second position, the contact face of the trigger member is substantially flush with the adjacent surface of the handle arrangement.

Although the trigger member could be a sliding trigger, it is currently preferred that the trigger member is supported on a pivot in the interior of the handle arrangement. A sliding trigger has a relative high friction interface with the handle since it must slide on rails so the pivoting arrangement of the invention beneficially enables a lighter action trigger. In the invention the substantially flush relationship of the contact surface with the adjoining portions of the handle arrangement provides a particularly ergonomic user interface. During extended periods of cleaning, the requirement to depress a 'dead man's trigger' arrangement in order to operate the vacuum cleaner may become tiresome, particularly as the user's finger must adopt a slightly extended position to maintain pressure on a trigger surface that stands proud from the grip during operation. This will affect especially those users with comparatively small and/or weak hands. In the invention, since the contact face in effect 'merges' with the handle when the trigger is depressed, the user's grip is able to adopt a more natural position which ensures that it is less tiring to maintain the trigger in the operating state for an extended period of time.

The trigger member may be biased into the first position by way of a spring element which exerts a predetermined activation force on the trigger member and, in one embodiment, the spring element is a compression spring that acts on a part of the contact surface. In addition to the low profile character of the trigger member, to further improve the ergonomics of the trigger member it is preferably biased with a force of less than 8N (Newtons), and particularly between about 0.5N and 6N. Still preferably, between about 0.5N and 3N which ensures an easy action to the trigger.

The trigger member may include an actuating member that is moved by movement of the contact face, the actuating member being arranged to contact an activating switch of a battery pack which is, preferably, carried adjacent an end of the handle arrangement and may include a part which extends inside the interior of the handle, the extending part including the activating switch.

The vacuum cleaner of the invention may include an electronic control module that is interfaced to the battery pack, the motor and fan unit and, in one embodiment, the trigger member and is operable to activate the motor and fan unit in response to a command signal initiated by the trigger member. Following receipt of the command signal, the controller may implement a predetermined delay period before activating the motor and fan unit. Potentially the delay could be configured (during manufacture for example) for any period of time but it is preferred if the delay is a relatively short period for example less than one second. Preferably the delay period is between half a second (0.5 seconds) and one second. Beneficially, the delay period guards against momentary operation of the motor in the event that the user presses the switch accidentally, for example by brushing the trigger lightly when grasping the vacuum cleaner but before being ready to begin cleaning. Such a feature improves the user experience but also reduces wear on the motor by reducing the number of start/stop cycles significantly over the lifetime of the machine.

It is envisaged that the handle arrangement may be an integral part of the vacuum cleaner, although it may also be a removable part. Therefore, expressed another way the invention provides a handle arrangement for a vacuum cleaner, the handle arrangement including a trigger member which is movable between first and second positions, the trigger member being resiliently biased into the first position in which position a contact surface of the trigger member is spaced away from an adjacent surface of the handle arrangement and wherein, when in the second position, the contact face of the trigger member is substantially flush with the adjacent surface of the handle arrangement.

### Brief description of the drawings

So that it may be more readily understood, embodiments of the invention will now be described by way of example only with reference to the accompanying drawings, in which:
Figure 1 is a perspective side view of a handheld vacuum cleaner in accordance with the invention;
Figure 2 is a side view of the vacuum cleaner in Figure 1 with a section of the handle cut away;
Figure 3 is a perspective side view of the handheld vacuum cleaner in Figure 1 but with the operating trigger/switch in a second position;
Figure 4 is a side view of the vacuum cleaner, as in Figure 2, but with the operating trigger in the second operating position;
Figure 5a is a simplified section view through the handle showing the operating trigger in the first operating position;
Figure 5b is a view of the handle like that in Figure 5, but with the operating trigger in the second operating position;
Figure 6 is a schematic view of a control system of the vacuum cleaner according to the invention;
Figure 7 is a flowchart of a control process implemented by the control system;
Figure 8 is a perspective view of an alternative embodiment of vacuum cleaner in accordance with the invention;
Figure 9 is an enlarged side view of a handle arrangement of the vacuum cleaner in Figure 8;
Figure 10 is a view of the handle arrangement in Figure 9 with a section cut away to show its interior;
Figure 11 is an enlarged view of the handle arrangement in Figure 9 wherein the trigger member is shown in a second operating position; and
Figure 12 is a view of the handle arrangement in Figure 11 with a section cut away to show its interior.

### Detailed description of the embodiments

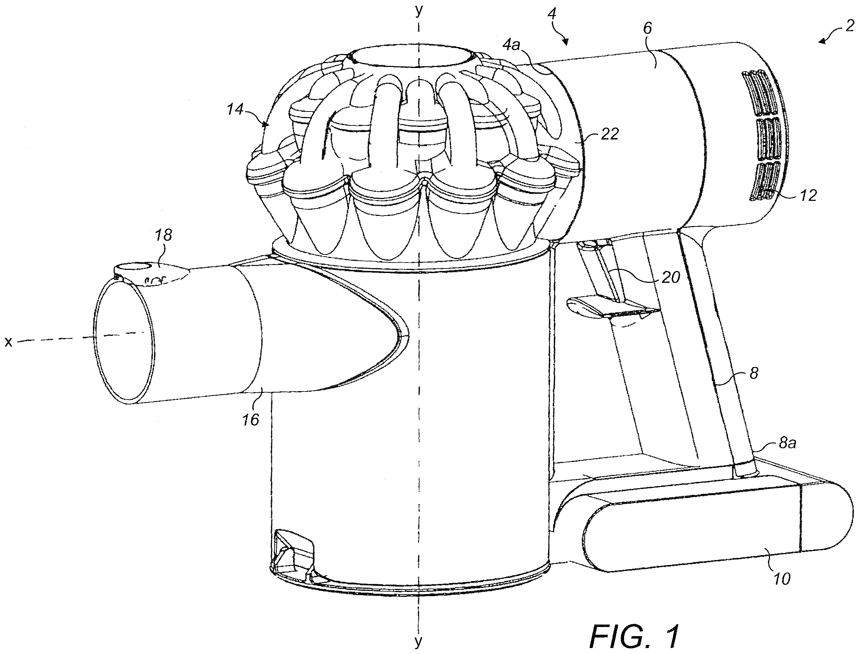

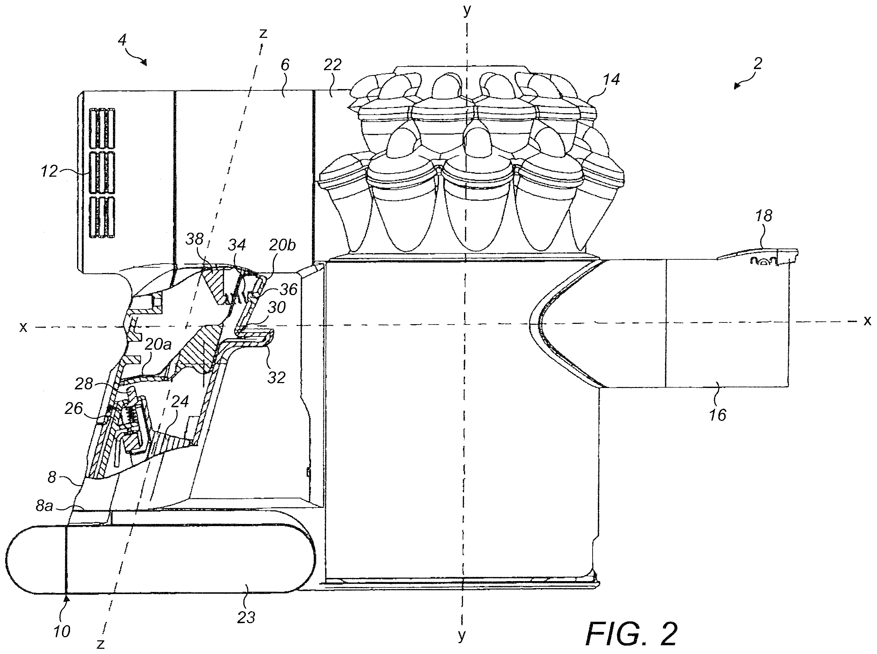

Referring firstly to Figures 1 and 2, a handheld vacuum cleaner 2 has a main body 4 which houses a motor and fan unit, an outer housing of which is indicated generally at 6. The motor and fan unit 6 is located above a generally upright handle or grip portion 8. The lower end 8a of the handle 8 supports a generally slab-like battery pack 10. A set of exhaust vents 12 are provided on the main body 4 for exhausting air from the handheld vacuum cleaner 2.

The main body 4 supports a cyclonic separating apparatus 14 that functions to remove dirt, dust and other debris from a dirt-bearing airflow drawn into the vacuum cleaner by the motor and fan unit. The cyclonic separating apparatus 14 is attached to a forward part 4a of the main body 4 and an air inlet conduit/nozzle 16 extends along a longitudinal axis X-X from a forward portion of the cyclonic separating apparatus 14 that is remote from the main body 4. The air inlet nozzle 16 is configured so that a suitable brush tool can be mounted to it and includes a catch 18 for securely holding such a brush tool when the tool is engaged with the inlet. The brush tool is not material to the present invention and so is not shown here. An elongate extension tube or wand (not shown) may also be mounted to the air inlet nozzle 16 to extend the cleaning reach of the vacuum cleaner.

The cyclonic separating apparatus 14 is located between the main body 4 and the air inlet nozzle 16 and has a longitudinal axis Y-Y which extends in a generally upright direction so that it is substantially orthogonal with the longitudinal axis X-X of the inlet nozzle 16. The handle 8 extends along an axis Z-Z that lies at a shallow angle to the axis Y-Y and which, in the exemplary embodiment is approximately 10 degrees, although any angle from orthogonal to about 20 degrees is suitable.

The handle 8 is oriented in a pistol-grip formation which is a comfortable interface for a user since it reduces stress on a user's wrist during cleaning. The cyclonic separating apparatus 14 is positioned close to the handle 8 which also reduces the moment applied to the user's wrist when the handheld vacuum cleaner 2 is in use. The handle 8 carries an on/off switch arrangement in the form of a trigger member 20 for turning the motor and fan unit 6 on and off. In use, the motor and fan unit draws dust laden air into the vacuum cleaner 2 via the air inlet nozzle 16. Dirt and dust particles entrained within the air flow are separated from the air and retained in the cyclonic separating apparatus 14. The cleaned air is ejected from the rear of the cyclonic separating apparatus 14 and conveyed by a short duct section 22 to the motor and fan unit 6 located within the main body 4, and is subsequently expelled through the air outlets 12 which may also include a fine particle filter by way of a final filtering stage to remove micro-contaminants from the airflow that exits the cleaner.

It should be noted at this point that although the cyclonic separating apparatus described here is cyclonic, this is not essential to the invention and other separating apparatus are viable, for example other bagless-type separating apparatus which feature a fibrous filter element in a whirl-chamber to separate contaminants from the airstream, or even a bagged-type separating apparatus as is common in the art. The precise configuration of the cyclonic separating apparatus is not material to the present invention and so will not be described in detail here. However, one particular configuration of cyclonic separation that is suitable is described in the Applicant's co-pending application GB2475312A.

Turning now to Figure 2, there is shown a side view of the handheld vacuum cleaner 2 in Figure 1 but with a portion of the outer skin of the handle cutaway so the interior of the handle can be seen and, in particular, the on/off trigger arrangement.

The battery pack 10 has a generally rectangular block-like base portion 23. An upstanding post 24 extends upwardly at an angle of approximately 80° to the plane of the base portion 23. The handle 8 is tubular in cross section with a generally oval shape that complements the cross section of the post 24 of the battery 10. Therefore, the post 24 of the battery 10 is receivable by the open lower end 8a of the handle 8 so that the battery pack 10 may be docked onto the vacuum cleaner 2. An upper end of the post 24 includes electrical terminals (not shown) that connect to corresponding electrical connectors housed in the interior of the handle 8 and which lead to an electronic control module (not shown) that is interfaced to the motor and fan unit. Electrical power is therefore transmitted from the battery pack 10 to the motor and fan unit 6 via the electrical connectors. The exact configuration of the electrical battery terminals and their respective connectors are not essential to the invention so will not be described in more detail here.

The battery post 24 also includes a mechanically actuated switch unit 26 that is oriented so as to extend upwardly from the top face of the post 24. The switch unit 26 includes a push switch member 28 and is operated by an end of the trigger member 20, as will now be described.

The trigger member 20 takes the form of a bell crank having a first end 20a in the form of an actuating finger that is engageable with the battery switch unit 26 and a second end 20b that provides a contact face for the trigger member 20 and which protrudes through a forwardly facing aperture 30 in the handle 8. The contact face 20b of the trigger is seen clearly in Figure 1 extending through the aperture 30. A plate-like finger rest 32 extends forwardly from the handle 8 at a position just below the aperture 30 and provides a means to prevent a user's finger from slipping off the trigger member 20 in use. It also allows a user to grasp the handle without actuating the trigger, during carrying for example.

The trigger member 20 is biased into a non-actuating position by a spring element 34 which, in this embodiment is a coil spring, that extends between a spring retaining member 36 provided on the rear of the contact face 20b and a spring abutment member 38 provided in the handle 8. The spring element 34 therefore biases the trigger member such that the contact face 20b protrudes from the aperture 30 in the handle and the actuating finger 20a is spaced from the actuating switch unit 26 of the battery pack 10. When the trigger member 20 is in this position, the motor and fan unit 6 does not operate. Expressed another way, the trigger arrangement takes the form of a so-called 'dead man's trigger' which will only operate the vacuum cleaner whilst it is being depressed by a user. The coil spring element 34 preferably biases the trigger member so that the trigger has a light action. For example, for a suitable light action the coil spring element 34 should have a spring constant so that the trigger member is biased outwardly with a force less than 8 Newtons. In the preferred embodiment, the coil spring has a spring constant which biases the trigger with a force of about 4 Newtons. However, a suitable range for the spring force is between about 0.5 and 5 Newtons.

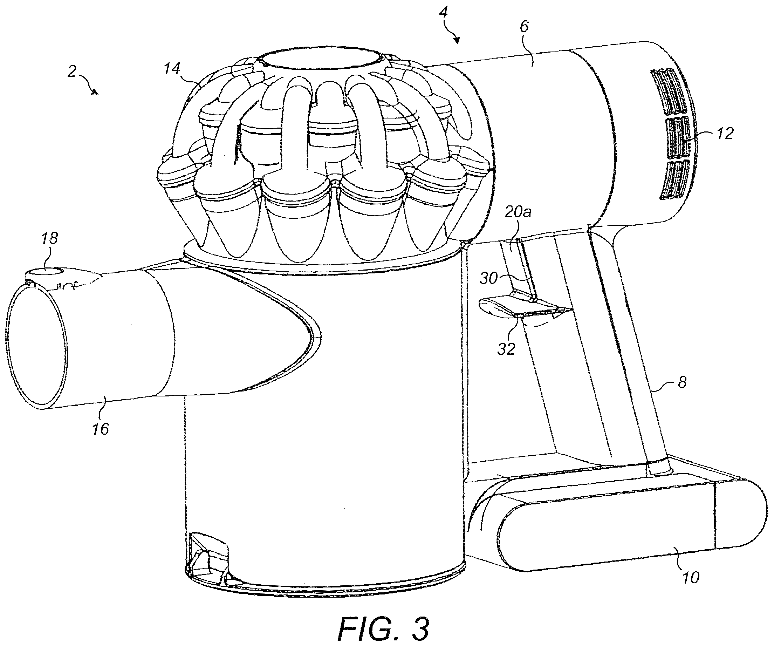

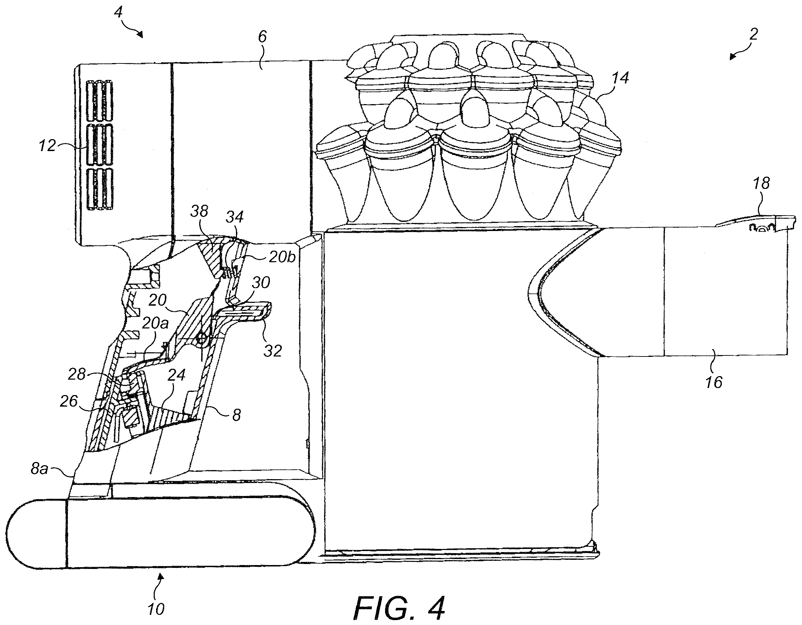

In order to operate the vacuum cleaner 2, a user depresses the trigger member 20 to an operating position, which is shown in Figure 3 and 4. In this position, the activating finger 20a of the trigger member 20 engages the activating switch unit 26 of the battery pack 10 which initiates power supply to the electronic control module of the motor and fan unit 6 thereby operating the vacuum cleaner. Also, in this position the contact face 20b of the trigger member 20 recedes into the trigger aperture 30 on the handle 8 so that it lies substantially flush with the adjoining portions of the handle 8.

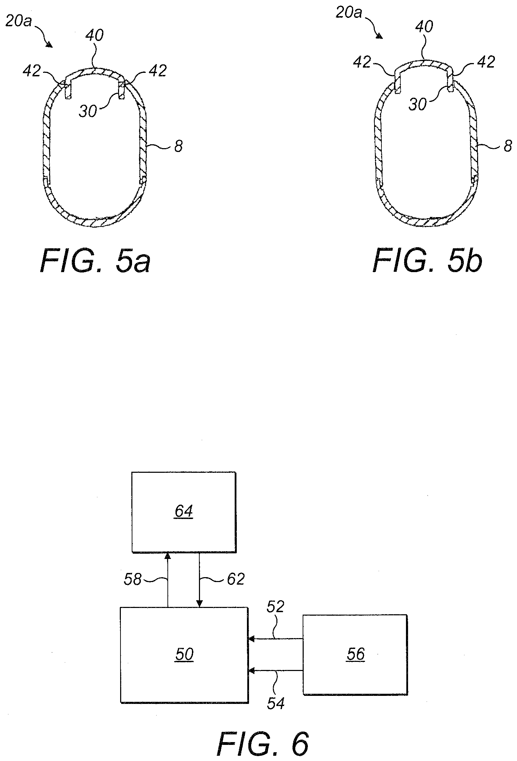

The two positions of the trigger member 20 are also shown in Figures 5a and 5b from an alternative perspective. As can be seen the contact face 20a of the trigger member 20 has an outwardly curved forward portion 40 bridged between two parallel walls 42 which act as a sliding guide for the trigger member 20 against edges of the trigger aperture 30 of the handle 8. In the non-operating position, as is shown in Figure 5a, the contact face 30 of the trigger member 20 extends beyond and therefore stands proud of the adjacent surface of the handle 8. Conversely, pressing the trigger, as shown in Figure 5b, causes the outwardly curved contact face 40 to 'merge' with the outer profile of the handle 8. It will be noted that in this position the edges of the contact face lie substantially flush with the neighbouring surfaces of the handle. The effect of this is to provide a particularly ergonomic user interface. During extended periods of cleaning, the requirement to depress a 'dead man's trigger' arrangement in order to operate the vacuum cleaner may become tiresome, particularly as the user's finger must adopt a slightly extended position to maintain pressure on a trigger surface that stands proud from the grip during operation. This will affect especially those users with comparatively small or weak hands and particularly those users with limited mobility. In the invention, since the contact face in effect 'merges' with the handle when the trigger is depressed, the user's grip is able to adopt a more natural position in which all of the fingers are in-a-line which ensures that it is less tiring to maintain the trigger in the operating state for an extended period of time. It should be noted that, although the contact face is shown as described as having a curved profile in the specific embodiment, a substantially flat contact face would be a suitable alternative and would achieve the same ergonomic benefits.

As has been mentioned, the upstanding post 24 of the battery pack 10 includes electrical contacts to interface with corresponding electrical connectors in the handle 8 which, in turn, extend to an electronic control module. Although the control module is not shown physically in Figures 1 to 4, a control system schematic of the vacuum cleaner is shown in Figure 6 and as can be seen a control module 50 receives power and signal inputs 52, 54 from a control circuit 56 associated with the battery pack and also supplies a power input 58 to the motor 60, a well as receiving a status input 62 from the motor 64. The exact nature of the status input from the motor is not material to the invention and will not be described here.

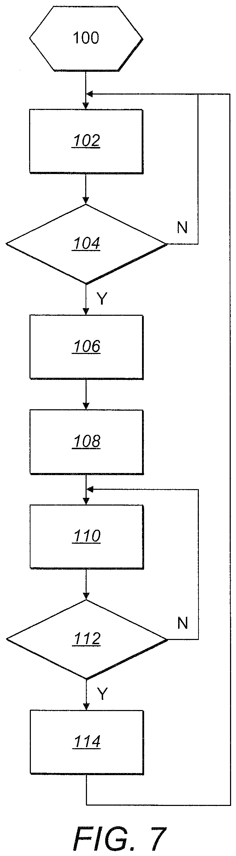

In the operation described above, the control module 50 activates the motor 64 as soon as it detects power from the battery back 10 as initiated from the triggering of the battery pack switch unit 26. However, due to the light action of the trigger member 20, there is a risk that a user may inadvertently toggle the trigger between on and off positions rapidly for example when grasping the handle 8 and before the user is ready to begin vacuuming. A control method to guard against this is shown in Figure 7.

From an initial condition 100, the routine executed by the control module 50 enters a monitoring state 102 during which the status of the power lines from the battery pack is monitored. In effect, therefore, in this embodiment it is the voltage on the battery power connections to the control module 50 that serves as an activation command for the controller. At decision gate 104, if the battery pack power signal is negative control passes back to the monitoring step 102. If the battery pack power signal is positive, that is to say, a user has pressed the trigger, the routine continues to step 106 which implements a delay state before proceeding to step 108 at which point the controller activates the motor.

The delay step 106 introduces a predetermined delay period between the action of the user pressing the trigger, and therefore the control module 50 receiving an activation command, and the activation of the motor. Potentially the delay could be configured (during manufacture for example) for any period of time but it is preferred if the delay is a relatively short period for example less than one second. Preferably the delay period is between 0.2 seconds and one second and more preferably about 0.5 seconds. Beneficially, the delay period guards against momentary operation of the motor in the event that the user presses the trigger accidentally, for example by brushing the trigger lightly when grasping the vacuum cleaner but before being ready to being cleaning. Such a feature improves the user experience but also reduces wear on the motor by reducing the number of start/stop cycles significantly over the lifetime of the machine.

Following the activation of the motor, the process flow continues to step 110 which checks the status of the power signal from the battery. For as long as the power signal remains positive, the process flow loops through decision gate 112 back to checking step 110. However, if a user releases the trigger, thereby causing the power signal from the battery to go negative, the process flows through the decision gate to step 114 at which the motor is deactivated. Following this, the control process returns to monitoring the status of the power input signal while the motor is not running.

Although not mentioned above, it should be appreciated that additionally, or alternatively, a predetermined delay period could also be added between the decision step 112 and the motor deactivation step 114. This would guard against the motor being turned off inadvertently, for example due to a user's finger momentarily relieving pressure slightly on the trigger. Such a deactivation delay could be implemented for between 0.2 and 1 second, for example.

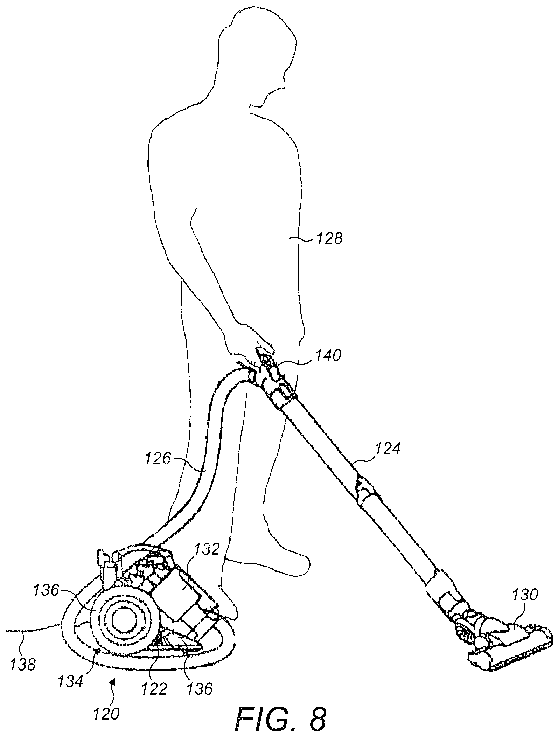

Although the trigger arrangement has been described with reference to a handheld vacuum cleaner, it also applies to other categories of vacuum cleaners such as cylinder vacuum cleaners and upright vacuum cleaners. Referring now to Figure 8, a cylinder vacuum cleaner 120 includes a base unit 122 connected to a wand 124 by a flexible hose 126. The wand 124 is carried by the hand of a user 128 at one of its ends and a cleaner head, or floor tool 130, is connected to the other end of the wand 124. The base unit 122 includes a cyclonic separating apparatus 132 that is supported on a rolling assembly 134 which, in this case, takes the form of upright wheels 136 mounted either side of a chassis 136. The flexible hose 126 is mounted to the forward part of the chassis 136 and ducts air from the rear end of the wand 124 into the cyclonic separating apparatus 132 in a known manner. The base unit 122 also includes a motor and fan unit (not shown) which is operable to draw a flow of air through the wand 124 and the separating apparatus 132. The motor and fan unit is powered by a mains power source source via a flex or cable 138. The skilled person will appreciate that the term 'mains power' is known by alternative expressions in some countries, including 'domestic power', 'line power' or 'wall power' for example. However, the term mains power is used here for simplicity and is intended to cover any alternating power source, be it 240v/50Hz or 120V/60Hz for example, that is available from wall sockets in domestic dwellings and other buildings.

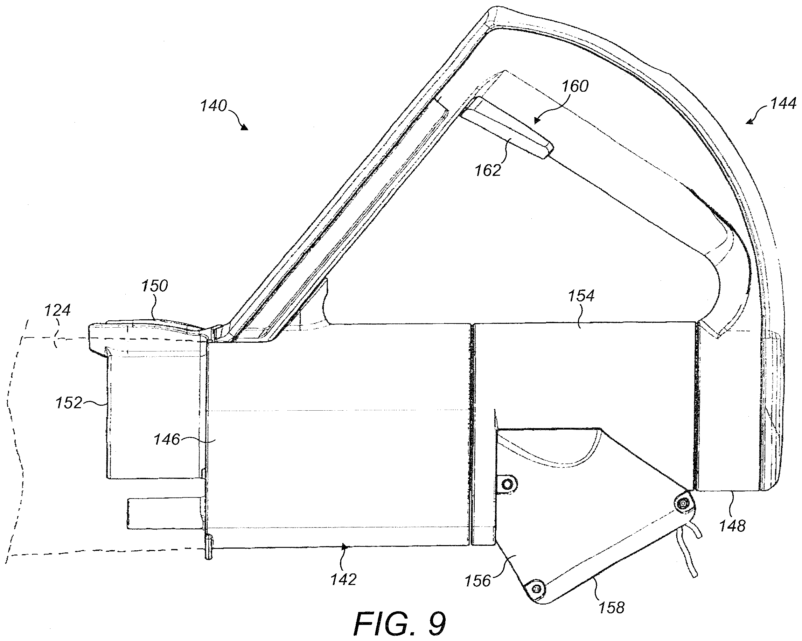

The wand 124 includes a handle assembly 140 which is shown generally in Figure 8, but shown more clearly in Figures 9 to 12, and which will now be described. The handle assembly 140 includes a main body portion 142 and a handgrip portion 144 that is configured so as to be graspable by a user and extends between a front tubular section 146 and a rear tubular section 148 of the main body portion 142. The front tubular section 146 is adapted to be connectable to the rear end of the wand 124 (shown ghosted in Figure 9) by means of a catch system 150 and includes a tubular air inlet 152 for receiving an air flow from the wand 124.

Between its ends, the main body portion 142 of the handle assembly supports a cylindrical rotatable section 154 which includes an air outlet portion 156 that extends away from the main body portion 142 at an angle from the side wall of the rotatable section 154. An outer end 158 of the air outlet portion 156 is adapted for connection to the hose (not shown in Figures 9 to 12) and so the rotatable section 154 serves to convey an air flow from the front end of the handle assembly 140 to the cyclonic separating apparatus 132 of the vacuum cleaner 120 via the flexible hose 126.

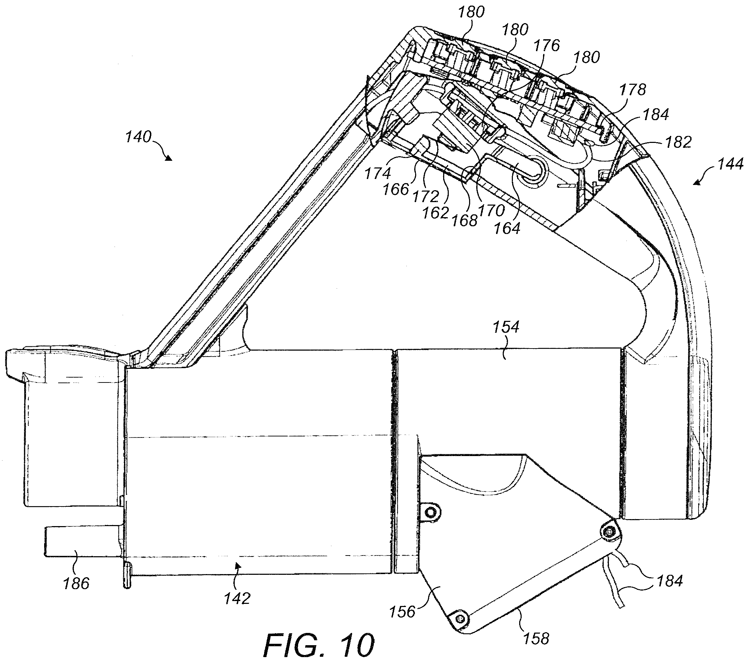

The handgrip portion 144 includes a trigger arrangement 160 in a similar manner to the previous embodiment. In Figure 9, the trigger arrangement 160 is shown in a first, non-operating, position and Figure 10 shows the handgrip portion 144 in the same state but partially cutaway so that the interior of the handgrip portion 144 surrounding the trigger arrangement 160 can be seen. In a manner similar to the previous embodiment, the trigger arrangement includes a trigger member 162 having an arm 164 that is pivotably mounted inside the handgrip portion 144. At the end of the trigger member 162 opposite the arm 164 is a contact face 166 that extends through an aperture 168 provided in the handgrip portion 144.

The contact face 166 of the trigger member 162 stands proud of the adjacent surfaces of the handgrip portion 144 and is biased into this position by a switch means 170 in the form of a miniature snap-action switch (commonly known as a Micro-Switch™) that is located in the interior of the handgrip portion 144 adjacent the trigger member. As can be seen in Figure 10, the switch 170 has a spring-like actuating arm 172 which engages an abutment member 174 on the interior surface of the contact face 166 and so the trigger is biased outwardly. Such a configuration ensures that the trigger member 162 has a light action, and preferably is operable with a force in the region of 0.5N to 1.5 N such that operation of such a trigger is easy for the user and avoids fatigue. If a slightly stronger trigger operation is desired, further spring means may be incorporated. In this embodiment, for example, a coiled torsion spring may be incorporated at the pivot.

Electrical contacts 176 of the snap action switch are connected to a control board 178 by way of a lead (not shown). In the embodiment illustrated, the control board 178 also supports various other control switches 180 to access other functions of the vacuum cleaner - for example activating and deactivating the rotatable brush bar, and modulating the suction power of the vacuum cleaner. Further electrical leads 182, 184 are provided to connect the control board 178 to the vacuum cleaner 120 by way of power leads 184 configured to extend along the flexible hose, and to connect the control board 178 to the wand 124 and cleaner head 130 by way of an electrical connection block 186 provided on the front section 146 of the handle assembly 140.

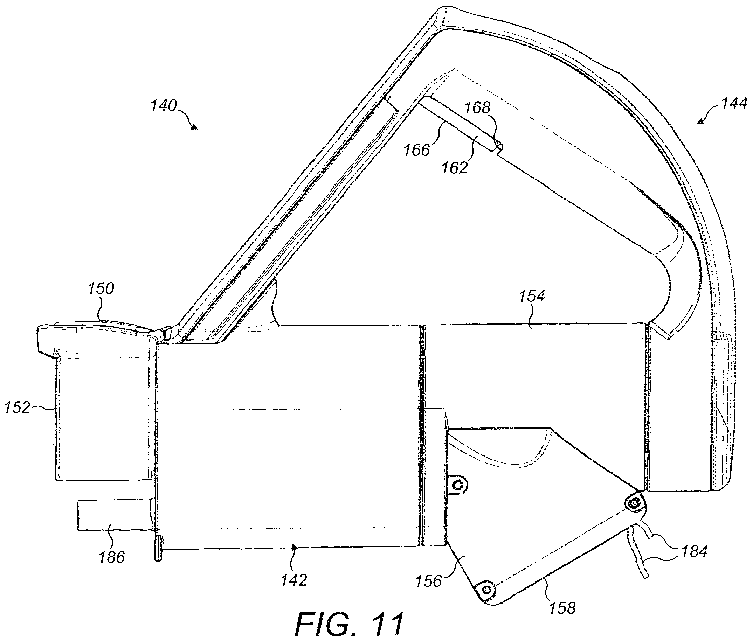

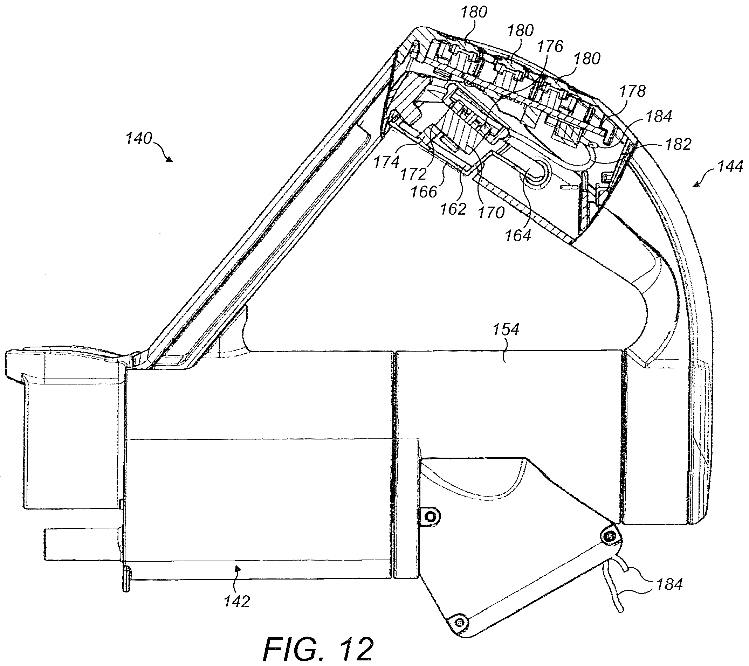

Figures 11 and 12 show the handle assembly 140 with the trigger member 162 in an activated position. In the same manner as the first embodiment, in this position the contact face 166 of the trigger member 162 recedes into the trigger aperture 168 on the handle so that it lies substantially flush with the adjoining portions of the handle. In effect, therefore, the contact face 166 of the trigger member 162 merges with the profile of the handle. It should be noted that although the handle assembly 140 is described as being used on a cylinder vacuum cleaner, the handle assembly could also be incorporated into an upright vacuum cleaner.

In addition to the ergonomic benefits conferred by the invention, a further advantage of is that a cylinder or, indeed, an upright vacuum cleaner is provided with a operating switch that is not latchable in the 'on' position as is the case for known switch mechanisms on cylinder and upright vacuum cleaners. This provides a surprising effect in that a user only activates the vacuum cleaner whilst grasping the handle rather than the known switch means on cylinder and upright vacuum cleaner in which the activating switch is required to be pressed a first time to turn the vacuum cleaner on, and then pressed a second time to turn the vacuum cleaner off. Therefore, a cylinder or upright vacuum cleaner incorporating the invention will be more energy efficient than known vacuum cleaners which tend to be turned on at the beginning of a cleaning session and left on throughout the duration of the session, whether or not the user is actually grasping the handle of the vacuum cleaner.

As an alternative to a mechanically operable switch, it should be noted that other trigger means are viable in the context of this embodiment, for example touch sensitive switches such as light sensors, capacitive sensors or resistive sensors. Such switch arrangements are all operable to act as a 'dead man's switch like the specific embodiment described above and therefore achieve the same energy efficiency advantages for cylinder and upright vacuum cleaners. It will also be appreciated that the control process described above with reference to Figures 6 and 7 could also be implemented in this embodiment.

The skilled person will appreciate that variations on the above embodiments may be made without departing from the scope of the invention, as defined by the claims.

For example, although the trigger member has been described above as being mounted at a pivot in the handle arrangement, it may also be slidably mounted.

Also, although it has been described above that the trigger member operates a switch mounted on the battery, it should be appreciated that this is only one way in which the battery pack, the trigger member and the controller may be interfaced. Alternatively, the trigger member could be arranged to activate a switch mounted directly, or indirectly, on the circuit board of the controller. In this case, it would be the activation of the circuit board mounted switch that would provide the controller with the activation command, rather than the specific embodiment described in which the controller 'watches' for a predetermined voltage on the battery connections.

## Claims

1. A handle arrangement for a vacuum cleaner (2), the handle arrangement including a trigger member (20) which is movable between first and second positions, the trigger member (20) being resiliently biased into the first position in which position a contact surface (20b) of the trigger member (20) is spaced away from an adjacent surface of the handle arrangement, **characterised in that**, in the second position, the contact surface (20b) of the trigger member (20) is substantially flush with the adjacent surface of the handle arrangement.

2. The handle arrangement of claim 1, wherein the trigger member (20) is supported on a pivot in the interior of the handle arrangement.

3. The handle arrangement of claim 1 or claim 2, wherein the trigger member (20) is biased into the first position by way of a resilient element (34) which exerts a predetermined activation force on the trigger member (20).

4. The handle arrangement of claim 3, wherein the resilient element (34) acts on a part of the contact surface (20b).

5. The handle arrangement of any one of claims 1 to 4, wherein the trigger member (20) is biased with a force of less than 8N.

6. The handle arrangement of claim 5, wherein the trigger member (20) is biased with a force between 0.5N and 6N.

7. The handle arrangement of claim 6, wherein the trigger member (20) is biased with a force between 0.5N and 3N.

8. A vacuum cleaner (2) comprising a main body (4) and a separating apparatus (14) associated with the main body (4), wherein the main body (4) includes a suction generator (6) for drawing air into the separating apparatus (14) and a handle arrangement as claimed in any one of the preceding claims, wherein the trigger member (20) is for activating the suction generator (6), and the trigger member (20) is moveable from the first position in which the suction generator (6) does not operate, into the second position to activate the suction generator (6).

9. The vacuum cleaner (2) of claim 8, wherein the trigger member (20) includes an actuating member (20a) that is moved by movement of the contact surface (20b), the actuating member (20a) being arranged to contact an activating switch (28) of a battery pack (10).

10. The vacuum cleaner (2) of claim 9, wherein the battery pack (10) is carried adjacent an end of the handle arrangement.

11. The vacuum cleaner (2) of claim 10, wherein the battery pack (10) includes a part (24) which extends inside the interior of a handle, the extending part including the activating switch (28).

12. The vacuum cleaner (2) of any one of claims 8 to 11, including a controller operable to activate the suction generator (6) in response to a command signal initiated by the trigger member (20), wherein the controller implements a predetermined delay period between receiving an command signal and activating the suction generator (6).

## Patentansprüche

1. Griffanordnung für einen Staubsauger (2), wobei die Griffanordnung einen Kippschalter (20) aufweist, der zwischen einer ersten und einer zweiten Position bewegt werden kann, wobei der Kippschalter (20) in die erste Position elastisch vorbelastet ist, wobei in dieser Position eine Kontaktfläche (20b) des Kippschalters (20) von einer angrenzenden Oberfläche der Griffanordnung beabstandet ist, **dadurch gekennzeichnet, dass** in der zweiten Position die Kontaktfläche (20b) des Kippschalters (20) mit der angrenzenden Oberfläche der Griffanordnung im Wesentlichen bündig ist.

2. Griffanordnung nach Anspruch 1, wobei der Kippschalter (20) auf einem Gelenk im Inneren der Griffanordnung gehalten wird.

3. Griffanordnung nach Anspruch 1 oder Anspruch 2, wobei der Kippschalter (20) mittels eines elastischen Elements (34), das eine vorgegebene Aktivierungskraft auf den Kippschalter (20) ausübt, in die erste Position vorbelastet ist.

4. Griffanordnung nach Anspruch 3, wobei das elastische Element (34) auf einen Teil der Kontaktfläche (20b) wirkt.

5. Griffanordnung nach einem der Ansprüche 1 bis 4, wobei der Kippschalter (20) mit einer Kraft von weniger als 8 N vorbelastet ist.

6. Griffanordnung nach Anspruch 5, wobei der Kippschalter (20) mit einer Kraft im Bereich von 0,5 N bis 6 N vorbelastet ist.

7. Griffanordnung nach Anspruch 6, wobei der Kippschalter (20) mit einer Kraft im Bereich von 0,5 N bis 3 N vorbelastet ist.

8. Staubsauger (2), der einen Hauptkörper (4) und eine Trennvorrichtung (14), die mit dem Hauptkörper (4) verbunden ist, umfasst, wobei der Hauptkörper (4) einen Sauggenerator (6) zum Saugen von Luft in die Trennvorrichtung (14) und eine Griffanordnung nach einem der vorhergehenden Ansprüche umfasst, wobei der Kippschalter (20) zum Einschalten des Sauggenerators (6) dient und wobei der Kippschalter (20) von der ersten Position, in der der Sauggenerator (6) nicht arbeitet, in die zweite Position zum Einschalten des Sauggenerators (6) bewegt werden kann.

9. Staubsauger (2) nach Anspruch 8, wobei der Kippschalter (20) ein Betätigungselement (20a) aufweist, das durch Bewegen der Kontaktfläche (20b) bewegt wird, wobei das Betätigungselement (20a) so angeordnet ist, dass es mit einem Schalter (28) zum Einschalten einer Batterieanordnung (10) in Kontakt ist.

10. Staubsauger (2) nach Anspruch 9, wobei die Batterieanordnung (10) angrenzend an ein Ende der Griffanordnung getragen wird.

11. Staubsauger (2) nach Anspruch 10, wobei die Batterieanordnung (10) ein Teil (24) aufweist, das sich im Inneren eines Griffs erstreckt, wobei das verlängerte Teil den Schalter (28) zum Einschalten umfasst.

12. Staubsauger (2) nach einem der Ansprüche 8 bis 11, der eine Steuerung aufweist, die betrieben werden kann, um den Sauggenerator (6) in Reaktion auf ein Steuersignal einzuschalten, das durch den Kippschalter (20) ausgelöst wurde, wobei die Steuerung eine vorgegebene Verzögerungszeitspanne zwischen dem Empfangen eines Steuersignals und dem Einschalten des Sauggenerators (6) umsetzt.

## Revendications

1. Agencement de poignée d'un aspirateur (2), l'agencement de poignée comportant un élément de déclenchement (20) déplaçable entre des première et seconde positions, l'élément de déclenchement (20) étant sollicité de manière élastique pour prendre la première position à laquelle une surface de contact (20b) de l'élément de déclenchement (20) est écartée d'une surface adjacente de l'agencement de poignée, **caractérisé en ce que**, à la seconde position, la surface de contact (20b) de l'élément de déclenchement (20) est sensiblement à niveau avec la surface adjacente de l'agencement de poignée.

2. Agencement de poignée selon la revendication 1, dans lequel l'élément de déclenchement (20) est supporté sur un pivot à l'intérieur de l'agencement de poignée.

3. Agencement de poignée selon la revendication 1 ou la revendication 2, dans lequel l'élément de déclenchement (20) est sollicité pour prendre la première position au moyen d'un élément élastique (34) qui exerce une force d'activation prédéterminée sur l'élément de déclenchement (20).

4. Agencement de poignée selon la revendication 3, dans lequel l'élément élastique (34) agit sur une partie de la surface de contact (20b).

5. Agencement de poignée selon l'une quelconque des revendications 1 à 4, dans lequel l'élément de déclenchement (20) est avec une force de moins de 8N.

6. Agencement de poignée selon la revendication 5, dans lequel l'élément de déclenchement (20) est sollicité avec une force entre 0,5N et 6N.

7. Agencement de poignée selon la revendication 6, dans lequel l'élément de déclenchement (20) est sollicité avec une force entre 0,5N et 3N.

8. Aspirateur (2) comprenant un corps principal (4) et un appareil de séparation (14) associé au corps principal (4), dans lequel le corps principal (4) comporte un générateur d'aspiration (6) pour aspirer de l'air dans l'appareil de séparation (14) et un agencement de poignée selon l'une quelconque des revendications précédentes, dans lequel l'élément de déclenchement (20) sert à activer le générateur d'aspiration (6), et l'élément de déclenchement (20) est déplaçable de la première position à laquelle le générateur d'aspiration (6) ne fonctionne pas, à la seconde position pour activer le générateur d'aspiration (6) .

9. Aspirateur (2) selon la revendication 8, dans lequel l'élément de déclenchement (20) comporte un élément d'actionnement (20a) qui est déplacé par le déplacement de la surface de contact (20b), l'élément d'actionnement (20a) étant agencé pour faire contact avec un commutateur d'actionnement (28) d'un bloc batterie (10).

10. Aspirateur (2) selon la revendication 9, dans lequel le bloc batterie (10) est porté adjacent à une extrémité de l'agencement de poignée.

11. Aspirateur (2) selon la revendication 10, dans lequel le bloc batterie (10) comporte une partie (24) qui s'étend à l'intérieur d'une poignée, cette partie comportant le commutateur d'actionnement (28).

12. Aspirateur (2) selon l'une quelconque des revendications 8 à 11, comportant une unité de commande exploitable pour activer le générateur d'aspiration (6) en réponse à un signal de commande lancé par l'élément de déclenchement (20), dans lequel l'unité de commande met en oeuvre une période de retard prédéterminée entre la réception d'un signal de commande et l'activation du générateur d'aspiration (6).
